# EUROPÄISCHE PATENTSCHRIFT

(11) **EP 1 353 489 B1**
(45) Veröffentlichungstag und Bekanntmachung des Hinweises auf die Patenterteilung: **24.02.2010**
(21) Anmeldenummer: 02007940.6
(22) Anmeldetag: 09.04.2002
(51) Int. Cl.: H04M 1/60

(54) **Mobiles Kommunikationsendgerät mit Freisprechbetrieb**
Mobile comunication terminal with handsfree use
Terminal de communication mobile avec fonctionnement mains-libres

(43) Veröffentlichungstag der Anmeldung: 15.10.2003
(73) Patentinhaber: Palm, Inc., Sunnyvale, CA 94085-2801 (US)
(72) Erfinder: Aubauer, Roland Dr., 46395 Bochholt (DE); Hülskemper, Michael, 46569 Hünxe (DE); Klinke, Stefano Ambrosius, Dr., 40489 Düsseldorf (DE); Lorenz, Frank, 46397 Bochholt (DE); Pörschmann, Christoph, Dr., 45966 Gladbeck (DE)
(74) Vertreter: Samson & Partner

(56) Entgegenhaltungen:
- EP-A- 0 903 909
- EP-A- 0 942 570
- US-A- 5 884 156
- US-A- 6 144 738

## Beschreibung

Die vorliegende Erfindung bezieht sich auf ein mobiles Kommunikationsendgerät mit einem ersten Lautsprecher zur Abgabe von Schallsignalen in einem Normalbetrieb des Kommunikationsendgerätes, einem zweiten Lautsprecher zur Abgabe von Schallsignalen in einem Freisprechbetrieb des Kommunikationsendgerätes, einer Antenne und einer Signalverarbeitungseinrichtung zum Verarbeiten von Signalen, die von der Antenne empfangen wurden und zum Zuführen verarbeiteter Signale zu dem ersten und dem zweiten Lautsprecher, abhängig davon, ob das Kommunikationsendgerät sich in dem Normalbetrieb oder dem Freisprechbetrieb befindet und auf ein Verfahren zum Ausstrahlen von Schallsignalen bei dem Kommunikationsendgerät.

Mobile Kommunikationsendgeräte der o. g. Art sind sowohl in einem Normalbetrieb, bei dem das Kommunikationsendgerät an den Kopf eines Benutzers gehalten wird als auch für einen Freisprechbetrieb, bei dem der Kopf des Benutzers von dem Kommunikationsendgerät entfernt angeordnet ist, verwendbar. Der erste Lautsprecher für einen Normalbetrieb kann für einen Freisprechbetrieb grundsätzlich nicht verwendet werden, da er die für einen Freisprechbetrieb erforderlichen Schalldruckpegel nicht erzeugen kann. Ein derartiges Gerät ist beispielweise aus EP-A-0942570 bekannt.

Aus diesem Grunde ist ein integrierter zweiter Lautsprecher für einen Freisprechbetrieb vorgesehen, der in vielen Fällen relativ zu dem ersten Lautsprecher auf der gegenüberliegenden Seite des Kommunikationsendgerätes angeordnet ist, an der genügend Raum zur Unterbringung des vergleichsweise größer bemessenen zweiten Lautsprechers vorhanden ist. Die Schallabstrahlung des zweiten Lautsprechers erfolgt üblicher Weise entweder direkt durch Auslassöffnungen in der Rückseite des Kommunikationsendgerätes, wobei davon ausgegangen wird, dass der erste Lautsprecher sowie eine Tastatur und eine Anzeige des Kommunikationsendgerätes auf dessen Vorderseite liegen.

Alternativ ist es auch möglich, die Schallsignale von dem zweiten Lautsprecher, der sich innerhalb des Gehäuses des Kommunikationsendgerätes befindet, über Kanäle zu Öffnungen in der Gehäuseoberfläche zu führen.

Der aufgrund des großen Platzbedarfs von Freisprechlautsprechern mobiler Kommunikationsendgeräte auf ihrer Rückseite angeordnete zweite Lautsprecher strahlt somit seine Schallenergie nicht in Richtung eines Benutzers eines Kommunikationsendgerätes ab. Dadurch kommt es zu einem dumpfen Höreindruck mit geringen Höhenanteilen, der die Verständlichkeit von Sprache negativ beeinflussen kann. Aufgrund dessen ist der klangliche Qualitätsunterschied zwischen dem Freisprechbetrieb und dem Normalbetrieb bei Kommunikationsendgeräten derzeit sehr hoch und wird bei künftigen Kommunikationsendgeräten, die mit erweiterter Sprachsignalbandbreite ausgestattet sein werden, noch anwachsen.

Ausgehend hiervor liegt der Erfindung die Aufgabe zugrunde, die Sprachqualität im Freisprechbetrieb mobiler Kommunikationsendgeräte, insbesondere solcher, bei denen der Freisprechlautsprecher auf der Geräterückseite angeordnet ist, zu verbessern und auch ein Verfahren zur Abgabe von Schallsignalen bei einem solchen Kommunikationsendgerät anzugeben.

Diese Aufgabe wird hinsichtlich des Kommunikationsendgerätes bei dem eingangs genannten Kommunikationsendgerät dadurch gelöst, dass im Freisprechbetrieb die Signalverarbeitungseinrichtung zum Zuführen verarbeiteter Signale einer Frequenz von mehr als 500 Hz zu dem ersten Lautsprecher ausgebildet ist und der erste Lautsprecher zur Wiedergabe von Schallsignalen einer Frequenz größer als 500 Hz ausgebildet ist.

Die Erfindung geht von der Grundidee aus, dass der für den Normalbetrieb vorgesehene Lautsprecher des mobilen Kommunikationsendgerätes zur Wiedergabe des hochfrequenten Bereiches eines auszusendenden Schallsignals im Freisprechbetrieb genutzt wird. Dem liegt zugrunde, dass gerade die hochfrequenten Schallsignalanteile von beispielsweise Sprache relativ geringe Energie aufweisen, so dass auch der Lautsprecher für Normalbetrieb in diesem Frequenzbereich für einen Freisprechbetrieb nutzbar ist. Insbesondere lässt sich der für den Freisprechmodus notwendige Schalldruckpegel im hochfrequenten Bereich des Audiospektrums ab 500 Hz wiedergeben.

Die Vorteile der vorliegenden Erfindung kommen besonders zum Tragen, wenn der erste Lautsprecher auf der Vorderseite und der zweite Lautsprecher auf der Rückseite des Kommunikationsendgerätes angeordnet ist. Wenn der zweite Lautsprecher für den Freisprechbetrieb als integrierter Lautsprecher ausgeführt ist, d. h. in die Rückseite des Kommunikationsendgerätes integriert ist, ist der Klangqualitätsunterschied zwischen Normalbetrieb und Freisprechbetrieb besonders deutlich, denn die Höhenanteile des Schallsignals werden aufgrund ihrer gerichteten Abstrahlung durch Öffnungen oder Kanäle in der Geräterückseite nur zu einem geringen Bruchteil zum Ohr eines Benutzers des Kommunikationsendgerätes geführt, so dass ihre Intensität überproportional vermindert wird.

Der zweite Lautsprecher für den Freisprechbetrieb kann das gesamte Spektrum der eingehenden Schallsignale ausstrahlen. Es ist jedoch bevorzugt, dass im Freisprechbetrieb die Signalverarbeitungseinrichtung zum Zuführen verarbeiteter Signale einer Frequenz von weniger als 500 Hz zu dem zweiten Lautsprecher ausgebildet ist. Denn in diesem Fall ergibt sich eine zweikanalige Schallwiedergabe, wobei der tieffrequente Signalanteil über den zweiten Lautsprecher und der hochfrequente Signalanteil über den ersten Lautsprecher wiedergegeben wird. Bevorzugt liegt die Grenze zwischen dem tieffrequenten Signalanteil, der über den zweiten Lautsprecher ausgestrahlt wird, und dem hochfrequenten Signalanteil, der über den ersten Lautsprecher ausgestrahlt wird, bei 1 kHz. Es ist auch möglich, dass der erste Lautsprecher zur Wiedergabe von Schallsignalen einer Frequenz > 1 kHz ausgebildet ist, während der zweite Lautsprecher dass gesamte auszustrahlende akustische Signal wiedergibt.

Bevorzugt ist im Freisprechbetrieb die Signalverarbeitungseinrichtung, abhängig von der relativen Anordnung des ersten und zweiten Lautsprechers zueinander, zur Anpassung der Intensitäten der von dem ersten und dem zweiten Lautsprecher abgegebenen Schallsignale zu einem natürlichen spektralen Intensitätsverlauf ausgebildet. Dies bedeutet, dass beispielsweise der erste Lautsprecher für den Normalbetrieb, der auch im Freisprechbetrieb genutzt wird, so weit ausgesteuert wird, dass seine abgegebene Schallintensität an die Schallintensität im tieffrequenten Bereich angepasst ist.

Bei einer zweikanaligen Schallwiedergabe können sowohl der erste als auch der zweite Lautsprecher über jeweils eigene Verstärker verfügen. Über die Signalverarbeitung können getrennte verarbeitete Signale für den ersten und den zweiten Lautsprecher aufbereitet und den zugehörigen gesonderten Verstärkern zugeführt werden.

Hinsichtlich des Verfahrens wird die o. g. Aufgabe gelöst durch ein Verfahren zum Ausstrahlen von Schallsignalen bei einem mobilen Kommunikationsendgerät, wobei die Schallsignale über einen ersten Lautsprecher für einen Normalbetrieb des Kommunikationsendgerätes und einen zweiten Lautsprecher für einen Freisprechbetrieb des Kommunikationsendgerätes abgegeben werden, wobei im Freisprechbetrieb der Frequenzbereich oberhalb von 1 kHz dem ersten Lautsprecher zugeführt wird.

Weitere Ausgestaltungen des erfindungsgemäßen Verfahrens ergeben sich aus den Verfahrens-Unteransprüchen. Die Vorteile des Verfahrens sind bereits oben bei der Beschreibung des neuartigen mobilen Kommunikationsendgerätes beschrieben worden.

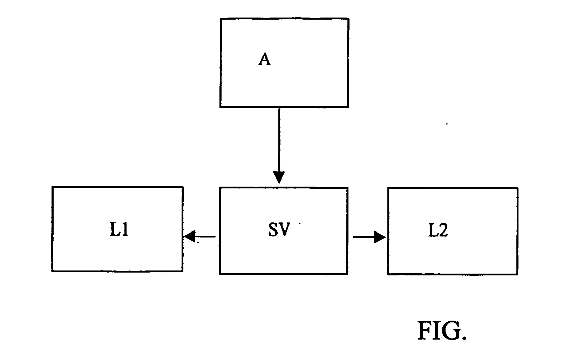

Ausführungsbeispiele der Erfindung werden nachfolgend anhand der Zeichnung noch näher beschrieben, die ein Blockdiagramm der für eine Schallwiedergabe wesentlichen Komponenten eines mobilen Kommunikationsendgerätes zeigt.

Von einer Antenne A empfangene Signale werden einer Signalverarbeitungseinheit SV zugeleitet, die die empfangenen Signale verarbeitet und zwei Lautsprechern L1, L2 zuführt.

Der erste Lautsprecher L1 wird in einem Normalbetrieb eines mobilen Kommunikationsendgerätes, das die genannten Komponenten enthält, verwendet und ist auf seiner Vorderseite angeordnet. Bei diesem Normalbetrieb wird das gesamte Frequenzspektrum empfangener Signale über den Lautsprecher L1 abgestrahlt.

Der Lautsprecher L2, der in die Rückseite des Kommunikationsendgerätes integriert ist, ist für einen Freisprechbetrieb vorgesehen. Die Schallausstrahlung erfolgt über Öffnungen in der Gehäuserückseite des Kommunikationsendgerätes. In dem Freisprechbetrieb teilt die Signalverarbeitungseinrichtung SV die empfangenen Signale in einen hochfrequenten Anteil oberhalb von 1 kHz und einen tieffrequenten Anteil unterhalb von 1 kHz auf, wobei der hochfrequente Anteil dem ersten Lautsprecher L1 und der niederfrequente Anteil dem zweiten Lautsprecher L2 zugeführt wird.

Für jeden Lautsprecher ist ein gesonderter Verstärker vorgesehen. Der jeweilige Verstärker wird so gesteuert, dass sich als Gesamtschallausgabe des Kommunikationsendgerätes für das Ohr eines Benutzers ein natürlicher Intensitätsverlauf der Schallsignale ergibt.

Auf diese Weise wird ein akustisches 2-Wege-System in einem mobilen Kommunikationsendgerät verwirklicht. Dabei wird die Klangqualität gegenüber bekannten Kommunikationsendgeräten erheblich verbessert, da die Wiedergabe der Höhen im Freisprechbetrieb in zufriedenstellender Weise erfolgen kann.

## Patentansprüche

1. Mobiles Kommunikationsendgerät mit einem ersten Lautsprecher (L1) zur Abgabe von Schallsignalen in einem Normalbetrieb des Kommunikationsendgerätes, einem zweiten Lautsprecher (L2) zur Abgabe von Schallsignalen: in einem Freisprechbetrieb des Kommunikationsendgerätes, einer Antenne (A) und einer Signalverarbeitungseinrichtung (SV) zum Verarbeiten von Signalen, die von der Antenne (A) empfangen wurden und zum Zuführen verarbeiteter Signale zu dem ersten (L1) und dem zweiten Lautsprecher (L2), abhängig davon, ob das Kommunikationsendgerät sich in dem Normalbetrieb oder dem Freisprechbetrieb befindet,
**dadurch gekennzeichnet,**
**dass** im Freisprechbetrieb die Signalverarbeitungseinrichtung (SV) zum Zuführen verarbeiteter Signale einer Frequenz von mehr als 500 Hz zu dem ersten Lautsprecher (L1) ausgebildet ist und der erste Lautsprecher (L1) zur Wiedergabe von Schallsignalen einer Frequenz größer als 500 Hz ausgebildet ist.

2. Kommunikationsendgerät nach Anspruch 1,
**dadurch gekennzeichnet,**
**dass** der erste Lautsprecher (L1) auf der Vorderseite und der zweite Lautsprecher (L2) auf der Rückseite des Kommunikationsendgerätes angeordnet ist.

3. Kommunikationsendgerät nach einem der Ansprüche 1 oder 2,
**dadurch gekennzeichnet,**
**dass** im Freisprechbetrieb die Signalverarbeitungseinrichtung (SV) zum Zuführen verarbeiteter Signale einer Frequenz von weniger als 500 Hz zu dem zweiten Lautsprecher (L2) ausgebildet ist.

4. Kommunikationsendgerät nach einem der Ansprüche 1 bis 3,
**dadurch gekennzeichnet,**
**dass** im Freisprechbetrieb die Signalverarbeitungseinrichtung (SV), abhängig von der relativen Anordnung des ersten (L1) und zweiten Lautsprechers (L2) zueinander, zur Anpassung der Intensitäten der von dem ersten (L1) und dem zweiten Lautsprecher (L2) abgegebenen Schallsignale zu einem natürlichen spektralen Intensitätsverlauf ausgebildet ist.

5. Verfahren zum Ausstrahlen von Schallsignalen bei einem mobilen Kommunikationsendgerät, wobei die Schallsignale über einen ersten Lautsprecher (L1) für einen Normalbetrieb des Kommunikationsendgerätes und einen zweiten Lautsprecher (L2) für einen Freisprechbetrieb des Kommunikationsendgerätes abgegeben werden,
**dadurch gekennzeichnet,**
**dass** im Freisprechbetrieb der Frequenzbereich oberhalb von 1 kHz dem ersten Lautsprecher (L1) zugeführt wird.

6. Verfahren nach Anspruch 5,
**dadurch gekennzeichnet,**
**dass** im Freisprechbetrieb der Frequenzbereich oberhalb von 1 kHz ausschließlich dem ersten Lautsprecher (L1) und der Frequenzbereich unterhalb von 1 kHz ausschließlich dem zweiten Lautsprecher (L2) zugeführt wird.

7. Verfahren nach Anspruch 5 oder 6,
**dadurch gekennzeichnet,**
**dass** im Freisprechbetrieb die Signalverarbeitungseinrichtung (SV), abhängig von der relativen Anordnung des ersten (L1) und zweiten Lautsprechers (L2) zueinander, die Intensitäten der von dem ersten (L1) und dem zweiten Lautsprecher (L2) abgegebenen Schallsignale zu einem natürlichen spektralen Intensitätsverlauf anpasst.

## Claims

1. A mobile communication terminal device comprising a first loudspeaker (L1) for generating sound signals in a normal operation of the communication terminal device, a second loudspeaker (L2) for generating sound signals in a hands-free operation of the communication terminal device, an antenna (A) and a signal processing apparatus (SV) for processing signals received by the antenna (A) and for supplying processed signals to the first (L1) and the second (L2) loudspeaker, depending on whether the communication terminal device is in normal operation or in the hands-free operation,
**characterised in that**
in the hands-free operation, the signal processing apparatus (SV) is designed to supply processed signals of a frequency of more than 500 Hz to the first loudspeaker (L1) and the first loudspeaker (L1) is designed for the reproduction of sound signals of a frequency greater than 500 Hz.

2. The communication terminal device according to claim 1,
**characterised in that**
the first loudspeaker (L1) is arranged on the front side and the second loudspeaker (L2) is arranged on the back side of the communication terminal device.

3. The communication terminal device according to one of the claims 1 or 2,
**characterised in that**
in the hands-free operation, the signal processing apparatus (SV) is designed to supply processed signals of a frequency of less than 500 Hz to the second loudspeaker (L2).

4. The communication terminal device according to one of the claims 1 to 3,
**characterised in that**
in the hands-free operation, the signal processing apparatus (SV) is designed, depending on the relative arrangement of the first (L1) and second (L2) loudspeaker to each other, for adaptation of the intensities of the sound signals generated by the first (L1) and the second loudspeaker (L2) to a natural spectral intensity course.

5. A method of emitting sound signals at a mobile communication terminal device wherein the sound signals are generated via a first loudspeaker (L1) for a normal operation of the communication terminal device and a second loudspeaker (L2) for a hands-free operation of the communication terminal device,
**characterised in that**
in the hands-free operation, the frequency range above 1 kHz is supplied to the first loudspeaker (L1).

6. The method according to claim 5,
**characterised in that**
in the hands-free operation, the frequency range above 1 kHz is exclusively supplied to the first loudspeaker (L1) and the frequency range below 1 kHz is exclusively supplied to the second loudspeaker (L2).

7. The method according to claim 5 or 6,
**characterised in that**
in the hands-free operation, the signal processing apparatus (SV), depending on the relative arrangement of the first (L1) and second (L2) loudspeaker to each other, adapts the intensities of the sound signals emitted from the first (L1) and the second loudspeaker (L2) to a natural spectral intensity course.

## Revendications

1. Terminal de communication mobile comportant un premier haut-parleur (L1) pour le dégagement de signaux de sons dans une opération normale du terminal de communication mobile, un deuxième haut-parleur (L2) pour le dégagement de signaux de sons dans une opération mains libres du terminal de communication, une antenne (A) et un dispositif de traitement de signalisation (SV) pour le traitement de signaux reçus par l'antenne (A) et pour alimenter des signaux traités au premier (L1) et au deuxième haut-parleur (L2), en fonction de ce que le terminal de communication se trouve en opération normale ou en opération mains libres,
**caractérisé en ce que**
dans l'opération mains libres, le dispositif de traitement de signalisation (SV) est agencé à alimenter des signaux traités d'une fréquence de plus de 500 Hz au premier haut-parleur (L1) et le premier haut-parleur (L1) est agencé à la reproduction de signaux de sons d'une fréquence de plus de 500 Hz.

2. Terminal de communication selon la revendication 1,
**caractérisé en ce que**
le premier haut-parleur (L1) est arrangé sur la face avant et le deuxième haut-parleur (L2) est arrangé sur la face arrière du terminal de communication.

3. Terminal de communication selon l'une des revendications 1 ou 2,
**caractérisé en ce que**
dans l'opération mains libres, le dispositif de traitement de signalisation (SV) est agencé à alimenter des signaux traités d'une fréquence de moins de 500 Hz à un deuxième haut-parleur (L2).

4. Terminal de communication selon l'une des revendications 1 à 3,
**caractérisé en ce que**
dans l'opération mains libres, le dispositif de traitement de signalisation (SV), en fonction de l'arrangement relatif du premier (L1) et du deuxième haut-parleur (L2) l'un par rapport à l'autre, est agencé à l'adaptation des intensités des signaux de sons dégagés par le premier (L1) et le deuxième haut-parleur (L2) à une course d'intensité spectrale naturelle.

5. Procédé d'émission de signaux de sons dans un terminal de communication mobile, les signaux de sons étant dégagés par un premier haut-parleur (L1) pour une opération normale du terminal de communication et un deuxième haut-parleur (L2) pour une opération mains libres du terminal de communication,
**caractérisé en ce que**
dans l'opération mains libres, la gamme de fréquence au-dessus de 1 kHz est alimentée au premier haut-parleur (L1).

6. Procédé selon la revendication 5,
**caractérisé en ce que**
dans l'opération mains libres, la gamme de fréquence au-dessus de 1 kHz est alimentée exclusivement au premier haut-parleur (L1) et la gamme de fréquence au-dessous de 1 kHz est exclusivement alimentée au deuxième haut-parleur (L2).

7. Procédé selon la revendication 5 ou revendication 6,
**caractérisé en ce que**
dans l'opération mains libres, le dispositif de traitement de signalisation (SV) adapte, en fonction de l'arrangement relatif du premier (L1) et du deuxième haut-parleur (L2) l'un par rapport à l'autre, les intensités des signaux de sons dégagés par le premier (L1) et le deuxième haut-parleur (L2) à une course d'intensité spectrale naturelle.
